(19) Europäisches Patentamt
European Patent Office
Office européen des brevets

(11) EP 2 803 703 A1

(12) **EUROPEAN PATENT APPLICATION**
published in accordance with Art. 153(4) EPC

(43) Date of publication:
**19.11.2014 Bulletin 2014/47**

(21) Application number: **13735987.3**

(22) Date of filing: **08.01.2013**

(51) Int Cl.:
***C08L 101/00*** *(2006.01)* ***C08G 77/04*** *(2006.01)*
***C08J 3/28*** *(2006.01)* ***C08L 83/04*** *(2006.01)*

(86) International application number:
**PCT/JP2013/050068**

(87) International publication number:
**WO 2013/105539 (18.07.2013 Gazette 2013/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2012 JP 2012004072**
**03.07.2012 JP 2012149483**

(71) Applicant: **Sekisui Chemical Co., Ltd.**
**Osaka 530-8565 (JP)**

(72) Inventors:
- **MUKOHATA, Daisuke**
**Mishima-gun**
**Osaka 618-0021 (JP)**
- **INUI, Nobuhiko**
**Mishima-gun**
**Osaka 618-0021 (JP)**

(74) Representative: **Ter Meer Steinmeister & Partner**
**Patentanwälte**
**Mauerkircherstrasse 45**
**81679 München (DE)**

# (54) RESIN COMPOSITE MATERIAL AND METHOD FOR PRODUCING RESIN COMPOSITE MATERIAL

(57) To provide a resin composite material in which aggregation of silane compounds in the resin is suppressed and the linear expansion coefficient is lowered, and a method for producing the resin composite material. A resin composite material containing a resin and a silane compound 12 having a structure of the formula (1), wherein a molecular chain of the resin and a molecular chain of the silane compound 12 form an IPN structure or a semi-IPN structure, and a method for producing a resin composite material including a step of mixing a resin and a silane compound 12a to obtain a resin composition and an IPN structure formation step of allowing a plurality of the silane compounds 12a contained in the resin composition to be condensed with each other. Each of Rs in the formula (1) is independently selected from the group consisting of hydrogen, halogen and an arbitrary organic functional group and at least one thereof is a reactive organic functional group. x represents 1 or 1.5. n represents an integer of 100 or more and 10000 or less.

[FIG. 1]

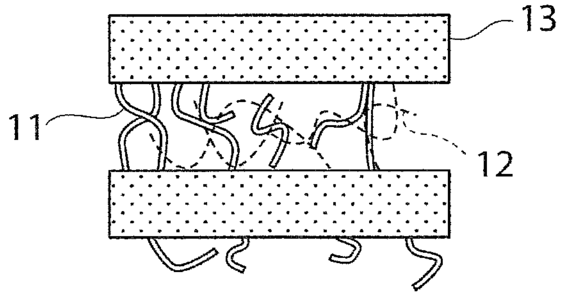


EP 2 803 703 A1

## Description

TECHNICAL FIELD

The present invention relates to a resin composite material prepared by allowing a silane compound to be dispersed in a thermoplastic resin and a method for producing the resin composite material, and particularly relates to a resin composite material in which a silane compound and a resin form an IPN structure or a semi-IPN structure and a method for producing the resin composite material.

BACKGROUND ART

Resin composite materials allowing a filler or a rubbery component to be blended into various resins have hitherto been known. By allowing various fillers or rubbery components to be blended into a thermoplastic resin, for example, the linear expansion coefficient of the resin composite material can be enhanced and it is possible to impart various physical properties to the resin composite material.

In Patent Document 1 below, a resin composite material having a form in which a thermoplastic elastomer is dispersed in a network-like manner in a thermoplastic resin is disclosed, and it is stated that the linear expansion coefficient of the resin composite material can be lowered.

PRIOR ART DOCUMENT

PATENT DOCUMENT

Patent Document 1: Japanese Patent No. 3290740

SUMMARY OF THE INVENTION

PROBLEMS TO BE SOLVED BY THE INVENTION

However, like the resin composite material in Patent Document 1, it has been difficult to enhance the density of the network only by simply blending a thermoplastic elastomer into a thermoplastic resin. Moreover, the thermoplastic elastomer has a low glass transition temperature and there is a problem that the heat resistance is low. Thus, the linear expansion coefficient of the resin composite material has failed to be sufficiently lowered.

The present invention is aimed at attaining the network formation of a silane compound that has high heat resistance in a resin and providing a resin composite material with lowered linear expansion coefficient and a method for producing the resin composite material.

MEANS FOR SOLVING THE PROBLEMS

A resin composite material according to the present invention is a resin composite material comprising a resin and a silane compound having a structure of the formula (1), wherein a molecular chain of the resin and a molecular chain of the silane compound form an IPN structure or a semi-IPN structure.

[Chemical Formula 1]

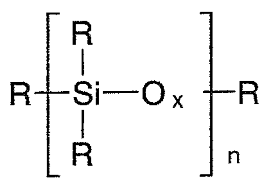

...Formula (1)

Each of Rs in the formula (1) is independently selected from the group consisting of hydrogen, halogen and an arbitrary organic functional group, and at least one thereof is a reactive organic functional group. x represents 1 or 1.5. n represents an integer of 100 or more and 10000 or less.

Another resin composite material according to the present invention is a resin composite material comprising a resin and a silane compound having a structure of the formula (1), wherein the storage elastic modulus of the resin composite material is larger than the loss elastic modulus at all times in a range of frequency of 0.01 to 100 Hz when

the viscoelasticity measurement is performed at a temperature equal to or higher than the melting point of the resin composite material, a gel contained in the resin composite material contains a compound having a silicon atom, and the degree of swelling of the gel contained in the resin composite material is 500% or less.

[Chemical Formula 2]

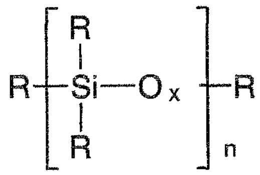

...Formula (1)

Each of Rs in the formula (1) is independently selected from the group consisting of hydrogen, halogen and an arbitrary organic functional group, and at least one thereof is a reactive organic functional group. x represents 1 or 1.5. n represents an integer of 100 or more and 10000 or less.

In a certain aspect of the resin composite material according to the present invention, each of Rs in the formula (1) is independently selected from the group consisting of hydrogen, chlorine, a silyl, a siloxy, an alkoxy, a vinyl, an aryl, an alkyl, an alkylamine, an ether, an ester, an amine, an amide, a thiol, a methacryl, an acryl, an epoxy, a ureido, a mercapto, a sulfide and an isocyanate.

In another certain aspect of the resin composite material according to the present invention, at least one of Rs in the formula (1) is a reactive organic functional group selected from the group consisting of a vinyl, an alkylamine, an amine, a methacryl, an acryl, an epoxy, a ureido, a mercapto, a sulfide and an isocyanate.

In yet another certain aspect of the resin composite material according to the present invention, a polymer of the reactive organic functional groups is formed by allowing the reactive organic functional group contained in the silane compound to undergo a reaction in the resin composite material. In this case, since the network formation of the silane compound is promoted, the motion of the silane compound in the resin is further restricted. Thus, the linear expansion coefficient of the resin composite material can be further lowered.

In yet another certain aspect of the resin composite material according to the present invention, the silane compound and the resin form a chemical bond by allowing the reactive organic functional group contained in the silane compound to undergo a reaction in the resin composite material. In this case, since the silane compound and the resin are chemically bonded to each other, it has advantages such that the phase separation of the silane compound and the resin hardly occurs.

As the resin in the resin composite material according to the present invention, either of a thermoplastic resin and a thermosetting resin can be used. As the thermoplastic resin, either of a crystalline resin and an amorphous resin can be used. In the case of a crystalline resin, a molecular chain constituting the amorphous part of the crystalline resin forms an IPN structure or a semi-IPN structure with the molecular chain of the silane compound.

As the thermoplastic resin, a polyolefin is preferably used. In this case, it is possible to reduce the cost of the resin composite material, and the resin composite material can be easily molded.

A method for producing a resin composite material according to the present invention comprises a step of mixing a resin and a silane compound having a structure of the formula (2) to obtain a resin composition; and an IPN structure formation step of allowing a plurality of the silane compounds contained in the resin composition to be condensed with each other.

[Chemical Formula 3]

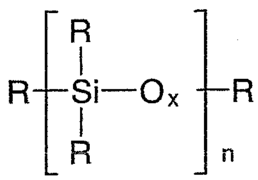

... Formula (2)

Each of Rs in the formula (2) is independently selected from the group consisting of hydrogen, halogen and an arbitrary organic functional group, and at least one thereof is a reactive organic functional group. x represents 1 or 1.5. n represents an integer of 1 or more and 100 or less.

In a certain aspect of the method for producing a resin composite material according to the present invention, a plurality of the silane compounds contained in the resin composition are allowed to be condensed with each other by

allowing the resin composition to stand in the presence of water at 80°C or higher in the IPN structure formation step. In this case, since the temperature and water, which are necessary for hydrolysis, can be sufficiently secured, it is possible to enhance the degree of condensation between the silane compounds.

In another certain aspect of the method for producing a resin composite material according to the present invention, each of Rs in the formula (1) is independently selected from the group consisting of hydrogen, chlorine, a silyl, a siloxy, an alkoxy, a vinyl, an aryl, an alkyl, an alkylamine, an ether, an ester, an amine, an amide, a thiol, a methacryl, an acryl, an epoxy, a ureido, a mercapto, a sulfide and an isocyanate.

In another certain aspect of the method for producing a resin composite material according to the present invention, at least one of Rs in the formula (1) is a reactive organic functional group selected from the group consisting of a vinyl, an alkylamine, an amine, a methacryl, an acryl, an epoxy, a ureido, a mercapto, a sulfide and an isocyanate.

In yet another certain aspect of the method for producing a resin composite material according to the present invention, a step of allowing the reactive organic functional group contained in the silane compound to undergo a reaction and forming a polymer of the reactive organic functional groups before the IPN structure formation step is further provided. In this case, since the network formation of the silane compound is promoted, the motion of the silane compound in the resin is further restricted. Thus, the linear expansion coefficient of the resin composite material can be further lowered.

The step of forming a polymer of the reactive organic functional groups is preferably executed by irradiating the resin composition with a radiation. In this case, compared to for example a method of adding peroxide, there is little deterioration of the resin.

In yet another certain aspect of the method for producing a resin composite material according to the present invention, a step of allowing the reactive organic functional group contained in the silane compound to undergo a reaction and allowing the silane compound and the resin to form a chemical bond before the IPN structure formation step is further provided. In this case, since the silane compound and the resin are chemically bonded to each other, it has advantages such that the phase separation of the silane compound and the resin hardly occurs.

The step of forming a chemical bond is preferably executed by irradiating the resin composition with a radiation. In this case, compared to for example a method of adding peroxide, there is little deterioration of the resin.

## EFFECT OF THE INVENTION

In the resin composite material according to the present invention, since the molecular chain constituting the amorphous part of the resin and the molecular chain of the silane compound having a structure of the formula (1) form an IPN structure or a semi-IPN structure, the silane compound is fixed to the amorphous part of the resin. On this account, since the motion of the silane compound in the resin is restricted, aggregation of the silane compounds in the resin is suppressed. Thus, according to the present invention, it is possible to provide a resin composite material with lowered linear expansion coefficient.

Moreover, in the method for producing a resin composite material according to the present invention, in a resin composition obtained by mixing a resin and a silane compound having a structure of the formula (2), since a plurality of the silane compounds are allowed to be condensed with each other, an IPN structure or a semi-IPN structure composed of the molecular chain constituting the amorphous part of the resin and the molecular chain of the silane compound is formed in the resin composite material. Thus, the carbon material is allowed to be uniformly dispersed in a composite resin molded body. As such, aggregation of the silane compounds in the resin is suppressed. Thus, the linear expansion coefficient of a resin composite material obtained by the production method according to the present invention can be effectively lowered.

## BRIEF DESCRIPTION OF THE DRAWINGS

[Fig. 1] Fig. 1 is a schematic view showing an IPN structure formed in a resin composite material in accordance with one embodiment of the present invention.

[Fig. 2] Fig. 2 is a schematic view showing a process in which an IPN structure is formed in accordance with one embodiment as a production method of the present invention.

## MODE FOR CARRYING OUT THE INVENTION

Hereinafter, the details of the present invention will be described.

(Resin composite material)

A resin composite material according to the present invention comprises a resin and a silane compound having a structure of the formula (1).

[Chemical Formula 4]

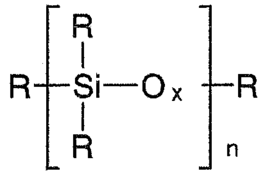

···Formula (1)

In the formula (1), each of Rs is independently selected from the group consisting of hydrogen, halogen and an arbitrary organic functional group. Each of Rs is preferably independently selected from the group consisting of hydrogen, chlorine, a silyl, a siloxy, an alkoxy, a vinyl, an aryl, an alkyl, an alkylamine, an ether, an ester, an amine, an amide, a thiol, a methacryl, an acryl, an epoxy, a ureido, a mercapto, a sulfide and an isocyanate. Rs each may be the same or different.

At least one of Rs in the formula (1) is a reactive organic functional group. The reactive organic functional group is not particularly limited, and for example, is selected from the group consisting of a vinyl, an alkylamine, an amine, a methacryl, an acryl, an epoxy, a ureido, a mercapto, a sulfide and an isocyanate. Of course, a plurality of Rs in the formula (1) may be reactive organic functional groups. In this case, the reactive organic functional groups as a plurality of Rs may be the same or different.

In the formula (1), x represents 1 or 1.5. n represents an integer of 100 or more and 10000 or less. When n is smaller than 100, the strength of the silane compound becomes lower, and the linear expansion coefficient of the resin composite material may not be sufficiently lowered even if an IPN structure or a semi-IPN structure described below is formed. When n is larger than 10000, the compatibility with the resin becomes poorer, the phase separation occurs, and an IPN structure or a semi-IPN structure described below may not be sufficiently formed.

For example, a compound having a structure of the formula (1) is obtained by allowing alkoxysilanes to be condensed. Such a compound also includes a compound with a structure in which alkoxysilanes are sterically bonded.

Moreover, in the compound having a structure of the formula (1), an example of the compound in which x represents 1.5 includes silsesquioxane. Silsesquioxane is obtained by hydrolyzing a trifunctional silane, and is a network type polymer having a structure of $(RSiO_{1.5})_n$. In this context, in the present invention, n is defined as an integer of 100 or more and 1000 or less in the same manner as above.

Silsesquioxane has a structure of a so-called cage shape. Moreover, since silsesquioxane has a size of about a few nanometers, it can be dispersed in a resin at a molecular level. Thus, the strength of the resin composite material can be enhanced while the processability and mechanical properties of the resin composite material are maintained. Furthermore, by selecting a functional group R, various physical properties can be developed.

In the present invention, as the resin, either of a thermoplastic resin and a thermosetting resin can be used. Moreover, as the thermoplastic resin, either of a crystalline thermoplastic resin and an amorphous thermoplastic resin can be used.

The thermoplastic resin is not particularly limited and various known thermoplastic resins can be used. Examples of the thermoplastic resin include polyethylene, polypropylene, an ethylene-vinyl acetate copolymer, an acrylonitrile-styrene copolymer, an acrylonitrile-butadiene-styrene copolymer, polyvinyl chloride, an acrylic resin, a methacrylic resin, polystyrene, polytetrafluoroethylene, polychlorotrifluoroethylene, polyvinylidene fluoride, an ethylene-vinylalcohol copolymer, a vinylidene chloride resin, chlorinated polyethylene, polydicyclopentadiene, a methylpentene resin, polybutylene, polyphenylene ether, a polyamide, polyphenylene ether, polyphenylene sulfide, polyetheretherketone, polyaryletherketone, a polyamide imide, a polyimide, polyetherimide, a polysulfone, polyether sulfone, a norbornene-based resin, polyvinyl alcohol, a urethane resin, polyvinylpyrrolidone, polyethoxyethyl methacrylate, polyformaldehyde, cellulose diacetate, polyvinyl butyral, an ABS resin and the like. These thermoplastic resins may be used alone or in combination of a plurality of kinds thereof.

As the thermoplastic resin, polyolefins such as polypropylene, polyethylene and an ethylene-propylene copolymer may be preferably used. Polyolefins are inexpensive and easily-moldable under heating. As such, by using a polyolefin as the thermoplastic resin, it is possible to reduce the cost of the resin composite material, and the resin composite material can be easily molded.

Among these thermoplastic resins, examples of a crystalline resin include a polyolefin, a polyamide and the like. In the case of a crystalline resin, a molecular chain of the amorphous part in the crystalline resin forms an IPN

structure or a semi-IPN structure with a molecular chain of the silane compound. Examples of an amorphous resin include polystyrene, polycarbonate and the like. In this case, it follows that the molecular chain of the amorphous resin forms an IPN structure or a semi-IPN structure with the molecular chain of the silane compound.

In the present invention, a thermosetting resin may be used as the resin. Even in the case of a thermosetting resin, a molecular chain of the thermosetting resin can form an IPN structure or a semi-IPN structure with a molecular chain of the silane compound. Thus, even in the case of a thermosetting resin, the linear expansion coefficient can be effectively lowered. Such a thermosetting resin is not particularly limited and examples thereof include an epoxy resin, flexible polyurethane, rigid polyurethane and the like. Above all, in the case where a soft thermosetting resin such as a soft flexible polyurethane is used, the linear expansion coefficient can be effectively lowered.

The content ratio of the resin to the silane compound in the resin composite material according to the present invention is not particularly limited; however, it is preferred that the silane compound is contained in a range of 1 to 50 parts by weight based on 100 parts by weight of the resin. If the content ratio is set to the above-mentioned range, the linear expansion coefficient of the resin composite material can be effectively lowered. When the content ratio of the silane compound is less than 1 part by weight, the linear expansion coefficient of the resin material may not be sufficiently lowered. When the content ratio of the silane compound exceeds 50 parts by weight, the phase separation thereof from the resin occurs and a resin composite material may not be prepared.

In the resin composite material according to the present invention, in the case where the resin is a thermoplastic resin, a molecular chain constituting the amorphous part of the thermoplastic resin and a molecular chain of the silane compound having a structure of the formula (1) form an IPN structure (an interpenetrating polymer network structure) or a semi-IPN structure (a semi-interpenetrating polymer network structure). Fig. 1 is a schematic view showing an IPN structure in the resin composite material.

The thermoplastic resin constituting the resin composite material is composed of a crystalline part 13 and an amorphous part 11. The amorphous part 11 exists in the space between the crystals constituting the crystalline part 13. At the amorphous part 11, a molecular chain constituting the amorphous part 11 exists.

With regard to one molecular chain of the thermoplastic resin, the whole thereof does not necessarily constitute the crystalline part 13 or the amorphous part 11. A part of the molecular chain may form a crystal structure to constitute the crystalline part 13, and in a part different from the above, the part may constitute the amorphous part 11 that does not form a crystal structure. In this case, one molecular chain of the thermoplastic resin constitutes the crystalline part 13 that forms a crystal structure and the amorphous part 11 that does not form a crystal structure. That is, the crystalline part 13 and the amorphous part 11 may be connected to each other by one molecular chain.

A silane compound 12 exists at the amorphous part 11 which is the space between the crystalline parts 13 of the thermoplastic resin. In the present invention, a molecular chain of the silane compound 12 forms an IPN structure or a semi-IPN structure with a molecular chain of the amorphous part 11. That is, a network structure in which the molecular chain of the silane compound 12 and the molecular chain constituting the amorphous part 11 of the thermoplastic resin are entangled with each other is formed. By allowing the molecular chains of the silane compound 12 and the amorphous part 11 to be entangled with each other, the motion of the molecular chain of the amorphous part 11 in the thermoplastic resin is restricted. Thus, by allowing the silane compound 12 to form an IPN structure or a semi-IPN structure in the thermoplastic resin, the linear expansion coefficient of the resin composite material can be effectively lowered.

In this connection, the IPN structure generally refers to an interpenetrating network structure of a plurality of macromolecular chains of the polymer, in which both macromolecular chains have a network structure respectively, and the semi-IPN structure refers to a structure formed in the case where one polymer has a network structure and the other has a linear or branched structure. In the resin composite material according to the present invention, as described above, the molecular chain of the silane compound 12 and the molecular chain constituting the amorphous part 11 of the thermoplastic resin need only to form a network structure in which they are entangled with each other. The structure may be an IPN structure or may be a semi-IPN structure.

As previously described, in the present invention, an amorphous thermoplastic resin may be used as the resin, and in this case, a molecular chain constituting the amorphous resin forms the IPN structure or the semi-IPN structure with a molecular chain of the silane compound. Moreover, as previously described, in the present invention, a thermosetting resin may be used as the resin, and in this case, a molecular chain of the thermosetting resin can form the IPN structure or the semi-IPN structure with a molecular chain of the silane compound.

In the resin composite material according to the present invention, since the silane compound 12 is fixed to the amorphous part 11 by the IPN structure or semi-IPN structure described above, the storage elastic modulus becomes larger than the loss elastic modulus at all times in a range of frequency of 0.01 to 100 Hz when the viscoelasticity measurement is performed at a temperature equal to or higher than the melting point of the resin composite material.

Moreover, in the resin composite material, as described above, a part where an IPN structure or a semi-IPN structure is formed is composed of a gel. The gel is constituted by a network structure containing an inorganic substance, namely, a network structure containing the silane compound 12 as a compound with a silicon atom. As such, the degree

of swelling of the gel is lower than the degree of swelling of a gel constituted by a crosslinked body of general resins, and is 500% or less.

By taking the above-mentioned features into consideration, whether or not the resin composite material has an IPN structure or a semi-IPN structure can be confirmed by the viscoelasticity measurement described above, a measurement making sure that a compound with a silicon atom is contained in the gel, and measuring the degree of swelling of the gel.

That is, in the case where a resin composite material comprises a resin and a compound having a structure of the formula (1), the storage elastic modulus of the resin composite material is larger than the loss elastic modulus at all times in a range of frequency of 0.01 to 100 Hz when the viscoelasticity measurement is performed at a temperature equal to or higher than the melting point of the resin composite material, a gel contained in the resin composite material contains a compound with a silicon atom, and the degree of swelling of the gel contained in the resin composite material is 500% or less, the compound is considered to be the resin composite material according to the present invention having an IPN structure or a semi-IPN structure.

When whether or not a compound with a silicon atom is contained in the gel is evaluated, and when the degree of swelling of the gel is measured, it is preferred that the gel be extracted from the resin composite material to be subjected to the measurement. An example of a method of removing the gel includes a method of immersing the resin composite material in a good solvent and removing an undissolved component as the gel.

Moreover, in the resin composite material according to the present invention, the reactive organic functional groups contained in the compound having a structure of the formula (1) may form a polymer. In this case, the network formation of the compound having a structure of the formula (1) is promoted and a denser IPN structure or semi-IPN structure is formed. Thus, the motion thereof in the resin is further restricted, and the linear expansion coefficient of the resin composite material can be further lowered.

Furthermore, in the resin composite material according to the present invention, the reactive organic functional group contained in the compound having a structure of the formula (1) may form a chemical bond with the resin. In this case, since the compound having a structure of the formula (1) and the resin are not only entangled with each other by an IPN structure or a semi-IPN structure but also chemically bonded to each other, it has advantages such that the phase separation of the compound and the resin hardly occurs.

(Method for producing resin composite material)

In a method for producing a resin composite material according to the present invention, first, a step of mixing the resin and the silane compound having a structure of the formula (2) to obtain a resin composition is executed.

[Chemical Formula 5]

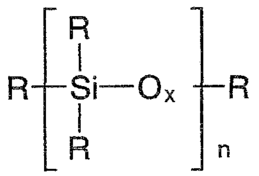

··· Formula (2)

Each of Rs in the formula (2) is the same as each of Rs in the above-described formula (1). x represents 1 or 1.5. Moreover, n in the formula (2) represents an integer of 1 or more and 100 or less. When n is larger than 100, the IPN structure may not be formed in the resulting resin composite material. Examples of the compound having a structure of the formula (2) may include vinyltriethoxysilane, 3-aminopropyltriethoxysilane, methyltrimethoxysilane, methyltriethoxysilane, ethyltrimethoxysilane and the like. Moreover, examples of the compound in which x represents 1.5 include silsesquioxane described previously and the like.

In this connection, in the case where the compound is an oligomer in which n represents about 10 to 100, it is possible to reduce the amount of by-products generated on condensation described below. As such, it is possible to efficiently add the silane compound to the resulting resin composite material.

The mixing method is not particularly limited, and the mixing can be performed by an appropriate method. Examples thereof include a melt-kneading method in which mixing is performed by kneading them under heating using a kneading apparatus such as a twin screw kneader of a Plastomill or the like, a single screw extruder, a twin screw extruder, a Banbury mixer or a roll mill; and the like. Moreover, a method of allowing the thermoplastic resin and the silane compound to be dissolved or dispersed in a solvent, followed by mixing can also be used.

The blending ratio of the thermoplastic resin and the silane compound is not particularly limited; however, it is preferred that the silane compound is blended in a range of 1 to 50 parts by weight based on 100 parts by weight of the

resin. When the blending ratio of the silane compound is less than 1 part by weight, the linear expansion coefficient of the resin material may not be sufficiently lowered. When the blending ratio of the silane compound exceeds 50 parts by weight, the phase separation thereof from the resin occurs and a composite material may not be prepared.

After the mixing, by allowing the reactive organic functional groups of the silane compound to undergo polymerization in the resulting resin, a step of forming a polymer of the reactive organic functional groups may be executed, although it is not an essential step.

Since a polymer is formed as mentioned above, the linear expansion coefficient of the resin composite material obtained by the production method of the present invention can be further lowered. Furthermore, since the silane compounds become difficult to be aggregated with each other at the time of allowing the silane compounds to be condensed with each other as described below, an IPN structure or a semi-IPN structure can be effectively formed.

The method of forming a chemical bond is not particularly limited. An example thereof includes a method of irradiating the resin composition with an electron beam. In this case, by the electron beam, a radical is generated at the reactive organic functional group. By the radical generated at the reactive organic functional group, the reactive organic functional groups can form a polymer.

Of course, the step of forming a chemical bond is not an essential step in the method for producing a resin composite material according to the present invention, and may not be executed.

Moreover, after the mixing, by allowing the reactive organic functional group of the silane compound to undergo a reaction with the resin in the resulting resin, a step of forming a chemical bond between the silane compound and the resin may be executed, although it is not an essential step.

Since a chemical bond is formed as mentioned above, the phase separation of the resin composite material obtained by the production method according to the present invention can be suppressed. Furthermore, since the silane compounds become difficult to be aggregated with each other at the time of allowing the silane compounds to be condensed with each other as described below, an IPN structure or a semi-IPN structure can be effectively formed.

The method of forming a chemical bond is not particularly limited. An example thereof includes a method of irradiating the resin composition with an electron beam. In this case, by the electron beam, a radical is generated at the reactive organic functional group. By the radical generated at the reactive organic functional group, the silane compound can be grafted to the resin.

Moreover, in the case where the reactive organic functional group is an amide group and the resin is a maleic acid modified thermoplastic resin, a chemical bond of an amide bond can be formed between the silane compound and the thermoplastic resin.

Of course, the step of forming a chemical bond is not an essential step in the method for producing a resin composite material according to the present invention, and may not be executed.

Next, a step of condensing a plurality of the silane compounds contained in the resin composition with each other. Thereby, the plurality of the silane compounds contained in the resin composition is condensed to form an IPN structure or a semi-IPN structure with the amorphous part of the resin, so that the resin composite material according to the present invention can be obtained.

The state of condensation in the above-mentioned step is shown in Fig. 2. In this connection, as previously described, Fig. 2 is a schematic view showing an example of the embodiment obtained in the case where the resin is a thermoplastic resin. Fig. 2 is a schematic view showing a process in which an IPN structure (right of Fig. 2) is formed by the condensation of the silane compounds from the thermoplastic resin composition (left of Fig. 2) before being subjected to the condensation. In the thermoplastic resin composition obtained by mixing raw materials, a silane compound 12a exists at the amorphous part 11.

In this context, in the thermoplastic resin composition, when the silane compounds 12a contained in the thermoplastic resin composition are allowed to be condensed with each other, the silane compounds 12a are bonded to each other while passing through the space between the molecular chains constituting the amorphous part 11. Thus, by allowing the silane compounds 12a to be condensed with each other, as shown in Fig. 1, molecular chains of the silane compound 12 entangled in a network manner with molecular chains constituting the amorphous part 11 are formed. In this way, it is possible to obtain the resin composite material according to the present invention in which a network structure allowing molecular chains of the amorphous part 11 and the silane compound 12 to be entangled with each other, namely, an IPN structure or a semi-IPN structure is formed.

Furthermore, in the case where the above-described step of irradiating the resin composition with an electron beam is executed before the step of forming an IPN structure or a semi-IPN structure, the silane compound 12a is chemically bonded to the thermoplastic resin. As such, since the movement of the silane compound 12a is restricted by the chemical bond at the time when the silane compounds 12a are condensed with each other, the condensation occurs without aggregation of the silane compounds 12a. Thus, an IPN structure or a semi-IPN structure in which the amorphous part 11 and the silane compound 12 are entangled with each other by the condensation can be effectively formed.

Although the case in which the resin is a thermoplastic resin is shown in the embodiment described with reference to Fig. 2, as previously described, in the present invention, a thermosetting resin may be used as the resin.

Also in this case, an IPN structure or a semi-IPN structure is formed by a molecular chain of the resin and a molecular chain of the silane compound.

Although the method of condensing the silane compounds is not particularly limited as long as the silane compounds can be condensed, an example thereof includes a method of allowing the thermoplastic resin composition to stand in the presence of water at 80°C or higher. In this case, the time required for the thermoplastic resin composition to be allowed to stand in the presence of water at 80°C or higher depends upon the silane compound to be used; however, it is preferably 24 hours or more because of allowing the silane compounds to be sufficiently condensed.

Hereinafter, the present invention will be specifically elucidated with reference to examples and comparative examples. It should be noted that the present invention is not limited to the following examples.

(Example 1)

By using a Labo Plastomill (manufactured by Toyo Seiki Seisaku-sho, Ltd., trade name "R-100"), 100 parts by weight of polypropylene (available from Prime Polymer Co., Ltd., trade name "J-721GR", tensile elastic modulus: 1.2 GPa, linear expansion coefficient: $11 \times 10^{-5}$/K) and 10 parts by weight of vinyltriethoxysilane were melt-kneaded at 180°C and formed into a sheet by press working. Thereby, a resin composition sheet with a thickness of 0.5 mm was obtained.

Subsequently, by immersing the resin composition sheet for 24 hours in hot water at 80°C, the vinyltriethoxysilane was allowed to undergo a reaction to obtain a resin composite material sheet with a thickness of 0.5 mm.

(Example 2)

A resin composite material sheet with a thickness of 0.5 mm was obtained in the same manner as in Example 1 except for adding 20 parts by weight of vinyltriethoxysilane.

(Example 3)

A resin composite material sheet with a thickness of 0.5 mm was obtained in the same manner as in Example 1 except for adding 40 parts by weight of vinyltriethoxysilane.

(Example 4)

A resin composite material sheet with a thickness of 0.5 mm was obtained in the same manner as in Example 1 except for using a methylmethoxysilane oligomer in place of vinyltriethoxysilane.

(Example 5)

A resin composite material sheet with a thickness of 0.5 mm was obtained in the same manner as in Example 1 except for using silsesquioxane (available from Sigma-Aldrich Co. LLC., product number "560391") in place of vinyltriethoxysilane.

(Example 6)

By using a Labo Plastomill (manufactured by Toyo Seiki Seisaku-sho, Ltd., trade name "R-100"), 100 parts by weight of polypropylene (available from Prime Polymer Co., Ltd., trade name "J-721GR", tensile elastic modulus: 1.2 GPa, linear expansion coefficient: $11 \times 10^{-5}$/K) and 10 parts by weight of 3-methacryloxypropyltrimethoxysilane were melt-kneaded at 180°C and formed into a sheet by press working. Thereby, a resin composition sheet with a thickness of 0.5 mm was obtained.

Subsequently, by irradiating the resin composition sheet with an electron beam, the organic functional group moiety of the 3-methacryloxypropyltrimethoxysilane was allowed to undergo polymerization.

Afterward, by immersing the resin composition sheet for 24 hours in hot water at 80°C, the 3-methacryloxypropyltrimethoxysilane was allowed to undergo a reaction to obtain a resin composite material sheet with a thickness of 0.5 mm.

(Example 7)

By using a Labo Plastomill (manufactured by Toyo Seiki Seisaku-sho, Ltd., trade name "R-100"), 100 parts by weight of polypropylene (available from Prime Polymer Co., Ltd., trade name "J-721GR", tensile elastic modulus: 1.2

GPa, linear expansion coefficient: 11 × $10^{-5}$/K) and 10 parts by weight of vinyltriethoxysilane were melt-kneaded at 180°C and formed into a sheet by press working. Thereby, a resin composition sheet with a thickness of 0.5 mm was obtained.

Subsequently, by irradiating the resin composition sheet with an electron beam, the polypropylene and the vinyltriethoxysilane were allowed to be chemically bonded to each other.

Afterward, by immersing the resin composition sheet for 24 hours in hot water at 80°C, the vinyltriethoxysilane was allowed to undergo a reaction to obtain a resin composite material sheet with a thickness of 0.5 mm.

(Example 8)

By using a Labo Plastomill (manufactured by Toyo Seiki Seisaku-sho, Ltd., trade name "R-100"), 100 parts by weight of maleic anhydride-modified polypropylene (available from Mitsui Chemicals, Inc., trade name "Admer QE800", tensile elastic modulus: 1.5 GPa, linear expansion coefficient: 10 × $10^{-5}$/K) and 10 parts by weight of 3-aminopropyltriethoxysilane were melt-kneaded at 180°C and formed into a sheet by press working. Thereby, a resin composition sheet with a thickness of 0.5 mm was obtained.

Afterward, by immersing the resin composition sheet for 24 hours in hot water at 80°C, the 3-aminopropyltriethoxysilane was allowed to undergo a coupling reaction to obtain a resin composite material sheet with a thickness of 0.5 mm.

(Example 9)

By using a Labo Plastomill (manufactured by Toyo Seiki Seisaku-sho, Ltd., trade name "R-100"), 100 parts by weight of polyethylene (available from Prime Polymer Co., Ltd., trade name "1300J", bending elastic modulus: 1.3 GPa, linear expansion coefficient: 11 × $10^{-5}$/K) and 10 parts by weight of vinyltriethoxysilane were melt-kneaded at 180°C and formed into a sheet by press working. Thereby, a resin composition sheet with a thickness of 0.5 mm was obtained.

Subsequently, by immersing the resin composition sheet for 24 hours in hot water at 80°C, the vinyltriethoxysilane was allowed to undergo a reaction to obtain a resin composite material sheet with a thickness of 0.5 mm.

(Example 10)

By using a Labo Plastomill (manufactured by Toyo Seiki Seisaku-sho, Ltd., trade name "R-100"), 100 parts by weight of polyamide (available from Asahi Kasei Corporation, trade name "1300S", bending elastic modulus: 2.7 GPa, coefficient of linear expansion: 8 × $10^{-5}$/K) and 10 parts by weight of 3-glycidoxypropyltriethoxysilane were melt-kneaded at 270°C and formed into a sheet by press working. Thereby, a resin composition sheet with a thickness of 0.5 mm was obtained.

Subsequently, by immersing the resin composition sheet for 24 hours in hot water at 80°C, the 3-glycidoxypropyltriethoxysilane was allowed to undergo a reaction to obtain a resin composite material sheet with a thickness of 0.5 mm.

(Example 11)

By using a Labo Plastomill (manufactured by Toyo Seiki Seisaku-sho, Ltd., trade name "R-100"), 100 parts by weight of ABS (available from Toray Industries, Inc., trade name "TOYOLAC 100", bending elastic modulus: 2.3 GPa, coefficient of linear expansion: 7.4 × $10^{-5}$/K) and 10 parts by weight of 3-glycidoxypropyltriethoxysilane were melt-kneaded at 200°C and formed into a sheet by press working. Thereby, a resin composition sheet with a thickness of 0.5 mm was obtained.

Subsequently, by immersing the resin composition sheet for 24 hours in hot water at 80°C, the 3-glycidoxypropyltriethoxysilane was allowed to undergo a reaction to obtain a resin composite material sheet with a thickness of 0.5 mm.

(Example 12)

By using a Labo Plastomill (manufactured by Toyo Seiki Seisaku-sho, Ltd., trade name "R-100"), 100 parts by weight of polycarbonate (available from Mitsubishi Engineering-Plastics Corporation, trade name "H-4000", tensile elastic modulus: 2.4 GPa, coefficient of linear expansion: 6.5 × $10^{-5}$/K) and 10 parts by weight of 3-glycidoxypropyltriethoxysilane were melt-kneaded at 270°C and formed into a sheet by press working. Thereby, a resin composition sheet with a thickness of 0.5 mm was obtained.

Subsequently, by immersing the resin composition sheet for 24 hours in hot water at 80°C, the 3-glycidoxypropyltriethoxysilane was allowed to undergo a reaction to obtain a resin composite material sheet with a thickness of 0.5 mm.

(Example 13)

First, 50 parts by weight of a bisphenol A type epoxy resin (available from Mitsubishi Chemical Corporation, trade name "828"), 50 parts by weight of a curing agent (available from New Japan Chemical Co. , Ltd. , trade name "RIKACID TH"), 2 parts by weight of a curing accelerator (available from SHIKOKU CHEMICALS CORPORATION, trade name "2MZ-A") and 10 parts by weight of vinyltriethoxysilane were blended and stirred with a homo disper-type stirrer. Then, the mixture was applied onto a release PET sheet. By allowing it to dry for 3 hours in an oven at 130°C, a resin composition sheet with a thickness of 0.5 mm was obtained.

Subsequently, by immersing the resin composition sheet for 24 hours in hot water at 80°C, the vinyltriethoxysilane was allowed to undergo a reaction to obtain a resin composite material sheet with a thickness of 0.5 mm.

(Comparative Examples 1, 2 and 4 to 13)

Resin composite material sheets with a thickness of 0.5 mm were obtained in the same manner as in Examples 1, 2 and 4 to 13 except that the resin composition sheets were not immersed for 24 hours in hot water at 80°C.

(Comparative Example 3)

A resin composite material sheet with a thickness of 0.5 mm was obtained in the same manner as in Example 3 except for adding 60 parts by weight of vinyltriethoxysilane.

[Evaluation of Examples and Comparative Examples]

The resin composite material sheets of Examples 1 to 13 and Comparative Examples 1 to 13 thus obtained were each evaluated for the presence or absence of the IPN structure and the linear expansion coefficient in the following way.

(1) Evaluation of IPN structure

The resin composite material sheets obtained in Examples 1 to 13 and Comparative Examples 1 to 13 were each measured for the following a) to c).

a) Viscoelasticity measurement

The prepared sheet was cut into a disk shape with a diameter of 8 mm and a thickness of 0.5 mm. This sample was fitted to a dynamic viscoelasticity measuring apparatus (manufactured by TA Instruments Japan Inc., ARES), and the measurement was performed under conditions of the shear mode, a measurement frequency of 0.1 to 100 Hz and a strain of 1%. The measurement temperature and the relationship between a storage elastic modulus Ga and a loss elastic modulus Gb are shown in Table 1 and Table 2.

b) Presence or absence of silicon compound

In a test tube, the prepared sheet and a suitable amount of a solvent were placed and the unreacted silane compound was eliminated. The solvent is shown in Table 1. A gel was extracted after 8 hours and dried under vacuum at 120°C for 3 hours to obtain a solid. Afterward, it was analyzed for the presence or absence of silicon with a nuclear magnetic resonance apparatus (JNM-ECA, manufactured by JEOL Ltd.).

c) Swelling property measurement

In a test tube, the prepared sheet and a suitable amount of a solvent were placed. The solvent is shown in Table 1. A gel was extracted after 8 hours and the weight was measured with an electronic balance. Subsequently, the gel was dried under vacuum at 120°C for 3 hours and the weight was measured with an electronic balance. The obtained results were applied to the following calculation formula and the degree of swelling was calculated.

Degree of swelling = {(weight of gel before drying) - (weight of gel after drying)}/(weight of gel after drying) × 100

As previously described, with regard to whether or not the resin composite material sheet has an IPN structure, it is necessary, in the measurement results of a) to c), that the following points be satisfied: a) the storage elastic modulus is larger than the loss elastic modulus at all times in the viscoelasticity measurement condition; b) the gel contained in the resin composite material contains a compound having a silicon atom in the evaluation of the presence or absence of silicon compound; and c) the degree of swelling of the gel is 500% or less in the swelling property measurement.

In the case where the resin composite material sheet satisfied all of the requirements, the sheet was considered to have an IPN structure. Moreover, with regard to the thermosetting resin, in the case where the requirements in the evaluations of a) and b) were satisfied, the sheet was considered to have an IPN structure. The results are shown in Table 1 and Table 2 below.

(2) Evaluation of linear expansion coefficient

The linear expansion coefficients at 30 to 80°C of the resin composite material sheets obtained in Examples 1 to 13 and Comparative Examples 1 to 13 were measured in accordance with JIS K7197. The results are shown in Table 1 and Table 2 below.

[Table 1]

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| Synthetic resin | Polypropylene | Polypropylene | Polypropylene | Polypropylene | Polypropylene | Polypropylene | Polypropylene | Maleic anhydride-modified polypropylene | Polyethylene | Polyamide | ABS | Polycarbonate | Epoxy resin |
| Silane compound | Vinyltriethoxysilane | Vinyltriethoxysilane | Vinyltriethoxysilane | Methylmethoxysilane oligomer | Silsesquioxane | 3-Methacryloxypropyl-trimethoxysilane | Vinyltriethoxysilane | 3-Aminopropyl-triethoxysilane | Vinyltriethoxysilane | 3-Glycidoxypropyl-triethoxysilane | 3-Glycidoxypropyl-triethoxysilane | 3-Glycidoxypropyl-triethoxysilane | Vinyltriethoxysilane |
| (Parts by weight) | 10 | 20 | 40 | 10 | 10 | 10 | 10 | 10 | 10 | 10 | 10 | 10 | 10 |
| Electron beam irradiation | Unperformed | Unperformed | Unperformed | Unperformed | Unperformed | Performed | Performed | Unperformed | Unperformed | Unperformed | Unperformed | Unperformed | Unperformed |
| Hot water treatment | Performed | Performed | Performed | Performed | Performed | Performed | Performed | Performed | Performed | Performed | Performed | Performed | Performed |
| a) Viscoelasticity measurement | Ga>Gb | Ga>Gb | Ga>Gb | Ga>Gb | Ga>Gb | Ga>Gb | Ga>Gb | Ga>Gb | Ga>Gb | Ga>Gb | Ga>Gb | Ga>Gb | Ga>Gb |
| b) Silicon compound | Presence | Presence | Presence | Presence | Presence | Presence | Presence | Presence | Presence | Presence | Presence | Presence | Presence |
| c) Degree of swelling (%) | <500 | <500 | <500 | <500 | <500 | <500 | <500 | <500 | <500 | <500 | <500 | <500 | <500 |
| IPN structure evaluation | ○ | ○ | ○ | ○ | ○ | ○ | ○ | ○ | ○ | ○ | ○ | ○ | ○ |
| Viscoelasticity measurement temperature ℃ | 190 | 190 | 190 | 190 | 190 | 190 | 190 | 190 | 190 | 270 | 210 | 270 | 200 |
| Solvent | Xylene | Xylene | Xylene | Xylene | Xylene | Xylene | Xylene | Xylene | Xylene | Formic acid | THF | THF | THF |
| Linear expansion coefficient ($\times 10^{-5}$/℃) | 7.4 | 6.9 | 6.8 | 6.9 | 8.1 | 6.6 | 7.8 | 8.1 | 8.2 | 6.9 | 7.1 | 5.7 | 6.1 |

[Table 2]

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 | Comp. Ex. 12 | Comp. Ex. 13 |
|---|---|---|---|---|---|---|---|---|---|---|---|---|---|
| Synthetic resin | Polypropylene | Polypropylene | Polypropylene | Polypropylene | Polypropylene | Polypropylene | Polypropylene | Maleic anhydride-modified polypropylene | Polyethylene | Polyamide | ABS | Polycarbonate | Epoxy resin |
| Silane compound | Vinyltriethoxysilane | Vinyltriethoxysilane | Vinyltriethoxysilane | Methylmethoxysilane oligomer | Silsesquioxane | 3-Methacryloxypropyl-trimethoxysilane | Vinyltriethoxysilane | 3-Aminopropyl-triethoxysilane | Vinyltriethoxysilane | 3-Glycidoxypropyl-triethoxysilane | 3-Glycidoxypropyl-triethoxysilane | 3-Glycidoxypropyl-triethoxysilane | Vinyltriethoxysilane |
| (Parts by weight) | 10 | 20 | 60 | 10 | 10 | 10 | 10 | 10 | 10 | 10 | 10 | 10 | 10 |
| Electron beam irradiation | Unperformed | Unperformed | Unperformed | Unperformed | Unperformed | Performed | Performed | Unperformed | Unperformed | Unperformed | Unperformed | Unperformed | Unperformed |
| Hot water treatment | Unperformed | Unperformed | Performed | Unperformed | Unperformed | Unperformed | Unperformed | Unperformed | Unperformed | Unperformed | Unperformed | Unperformed | Unperformed |
| a) Viscoelasticity measurement | Ga<Gb | Ga<Gb | Ga<Gb | Ga<Gb | Ga<Gb | Ga<Gb | Ga<Gb | Ga<Gb | Ga<Gb | Ga<Gb | Ga<Gb | Ga<Gb | Ga<Gb |
| IPN structure evaluation | × | × | × | × | × | × | × | × | × | × | × | × | × |
| Viscoelasticity measurement temperature °C | 190 | 190 | 190 | 190 | 190 | 190 | 190 | 190 | 190 | 270 | 210 | 270 | 200 |
| Solvent | Xylene | Xylene | Xylene | Xylene | Xylene | Xylene | Xylene | Xylene | Xylene | Formic acid | THF | THF | THF |
| Linear expansion coefficient ($\times 10^{-5}$/°C) | 12 | 13 | 12 | 12 | 12 | 11 | 12 | 13 | 11 | 9.1 | 10 | 7.5 | 8.3 |

In Comparative Examples 1 to 13, since the resin composition sheets were not subjected to a hot water treatment, no gel was formed. Thus, the resin composite material sheets failed to be evaluated for b) and c).

As apparent from Table 1 and Table 2, it is revealed that the resin composite material sheets obtained in Examples 1 to 13 according to the production method of the present invention have an IPN structure. In contrast, in the

production method of Comparative Examples 1, 2 and 4 to 13 in which the silane compound is not allowed to undergo condensation by a hot water treatment, no resin composite material sheet having an IPN structure is obtained. Furthermore, even in Comparative Example 3, no resin composite material sheet having an IPN structure is obtained.

Moreover, the resin composite material sheets obtained in Examples 1 to 13, compared to the resin composite material sheets obtained in Comparative Examples 1 to 13 corresponding thereto, are low in linear expansion coefficient. It is thought that this is because the resin composite material sheets have an IPN structure.

DESCRIPTION OF REFERENCE SYMBOLS

| | |
|---|---|
| 11 | Amorphous part |
| 12, 12a | Silane compound |
| 13 | Crystalline part |

## Claims

1. A resin composite material comprising a resin and a silane compound having a structure of the formula (1), wherein a molecular chain of the resin and a molecular chain of the silane compound form an IPN structure or a semi-IPN structure:

[Chemical Formula 1]

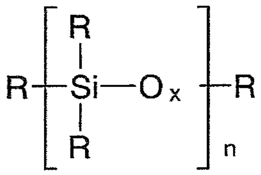

...Formula (1)

each of Rs in the formula (1) is independently selected from the group consisting of hydrogen, halogen and an arbitrary organic functional group and at least one thereof is a reactive organic functional group; x represents 1 or 1.5; and n represents an integer of 100 or more and 10000 or less.

2. A resin composite material comprising a resin and a silane compound having a structure of the formula (1), wherein the storage elastic modulus of the resin composite material is larger than the loss elastic modulus at all times in a range of frequency of 0.01 to 100 Hz when the viscoelasticity measurement is performed at a temperature equal to or higher than the melting point of the resin composite material;
a gel contained in the resin composite material contains a compound having a silicon atom; and
the degree of swelling of the gel contained in the resin composite material is 500% or less:

[Chemical Formula 2]

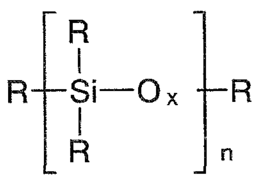

...Formula (1)

each of Rs in the formula (1) is independently selected from the group consisting of hydrogen, halogen and an arbitrary organic functional group and at least one thereof is a reactive organic functional group; x represents 1 or 1.5; and n represents an integer of 100 or more and 10000 or less.

3. The resin composite material according to claim 1 or 2, wherein each of Rs in the formula (1) is independently

selected from the group consisting of hydrogen, chlorine, a silyl, a siloxy, an alkoxy, a vinyl, an aryl, an alkyl, an alkylamine, an ether, an ester, an amine, an amide, a thiol, a methacryl, an acryl, an epoxy, a ureido, a mercapto, a sulfide and an isocyanate.

**4.** The resin composite material according to any one of claims 1 to 3, wherein at least one of Rs in the formula (1) is a reactive organic functional group selected from the group consisting of a vinyl, an alkylamine, an amine, a methacryl, an acryl, an epoxy, a ureido, a mercapto, a sulfide and an isocyanate.

**5.** The resin composite material according to any one of claims 1 to 4, wherein a polymer of the reactive organic functional groups is formed by reaction of the reactive organic functional group in the silane compounds in the resin composite material.

**6.** The resin composite material according to any one of claims 1 to 5, wherein the silane compound and the resin form a chemical bond by reaction of the reactive organic functional group in the silane compounds in the resin composite material.

**7.** The resin composite material according to any one of claims 1 to 6, wherein the resin is a thermoplastic resin.

**8.** The resin composite material according to claim 7, wherein the thermoplastic resin is a crystalline resin, and a molecular chain constituting an amorphous part of the crystalline resin forms an IPN structure or a semi-IPN structure with a molecular chain of the silane compound.

**9.** The resin composite material according to any one of claim 7, wherein the thermoplastic resin is an amorphous resin.

**10.** The resin composite material according to any one of claims 1 to 6, wherein the resin is a thermosetting resin.

**11.** A method for producing a resin composite material, the method comprising:

a step of mixing a resin and a silane compound having a structure of the formula (2) to obtain a resin composition; and
an IPN structure formation step of allowing a plurality of the silane compounds contained in the resin composition to be condensed with each other:

[Chemical Formula 3]

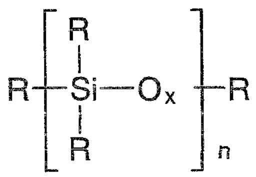

··· **Formula (2)**

each of Rs in the formula (2) is independently selected from the group consisting of hydrogen, halogen and an arbitrary organic functional group and at least one thereof is a reactive organic functional group; x represents 1 or 1.5; and n represents an integer of 1 or more and 100 or less.

**12.** The method for producing a resin composite material according to claim 11, wherein a plurality of the silane compounds contained in the resin composition are allowed to be condensed with each other by allowing the resin composition to stand in the presence of water at 80°C or higher in the IPN structure formation step.

**13.** The method for producing a resin composite material according to claim 11 or 12, wherein each of Rs in the formula (1) is independently selected from the group consisting of hydrogen, chlorine, a silyl, a siloxy, an alkoxy, a vinyl, an aryl, an alkyl, an alkylamine, an ether, an ester, an amine, an amide, a thiol, a methacryl, an acryl, an epoxy, a ureido, a mercapto, a sulfide and an isocyanate.

**14.** The method for producing a resin composite material according to any one of claims 11 to 13, wherein at least one of Rs in the formula (1) is a reactive organic functional group selected from the group consisting of a vinyl, an

alkylamine, an amine, a methacryl, an acryl, an epoxy, a ureido, a mercapto, a sulfide and an isocyanate.

**15.** The method for producing a resin composite material according to any one of claims 11 to 14, further comprising a step of forming of a polymer of the reactive organic functional groups by reaction of the reactive organic functional group in the silane compounds before the IPN structure formation step.

**16.** The method for producing a resin composite material according to claim 15, wherein the step of forming a polymer of the reactive organic functional groups is executed by irradiating the resin composition with a radiation.

**17.** The method for producing a resin composite material according to any one of claims 11 to 16, further comprising a step of reaction of the reactive organic functional group in the silane compounds and allowing the silane compound and the resin to form a chemical bond before the IPN structure formation step.

**18.** The method for producing a resin composite material according to claim 17, wherein the step of forming a chemical bond is executed by irradiating the resin composition with a radiation.

[FIG. 1]

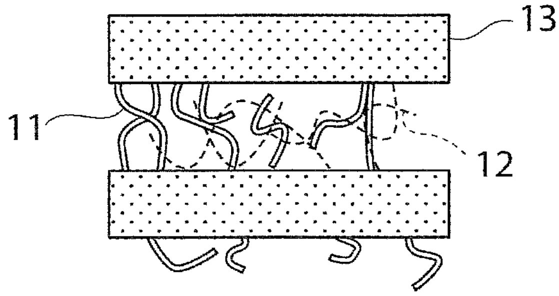
13
11
12

[FIG. 2]

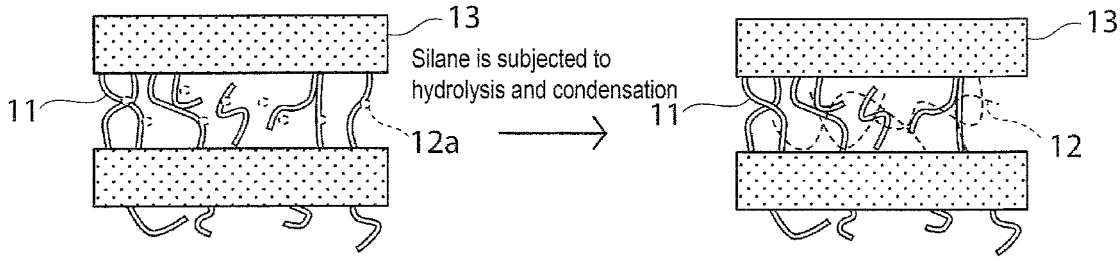
13
Silane is subjected to
hydrolysis and condensation
11
12a
13
11
12

## INTERNATIONAL SEARCH REPORT

International application No. PCT/JP2013/050068

A. CLASSIFICATION OF SUBJECT MATTER
*C08L101/00*(2006.01)i, *C08G77/04*(2006.01)i, *C08J3/28*(2006.01)i, *C08L83/04*(2006.01)i

According to International Patent Classification (IPC) or to both national classification and IPC

B. FIELDS SEARCHED

Minimum documentation searched (classification system followed by classification symbols)
C08K3/00-13/08, C08L1/00-101/14, C08G77/00-77/62, C08J3/00-3/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-303567 A (Shirouma Science Co., Ltd.), 28 October 2004 (28.10.2004), claims; paragraphs [0027] to [0031], [0038], [0049] (Family: none) | 1-3,7,9<br>4-6,8,10-18 |
| X<br>A | JP 2005-285377 A (Shirouma Science Co., Ltd.), 13 October 2005 (13.10.2005), claims; paragraphs [0013] to [0018], [0023], [0045] (Family: none) | 1-3,7,9<br>4-6,8,10-18 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>05 February, 2013 (05.02.13) | Date of mailing of the international search report<br>19 February, 2013 (19.02.13) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2013/050068

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 10-506956 A (Ameron International Corp.), 07 July 1998 (07.07.1998), claims; page 15, lines 2 to 10; page 16, line 22 to page 17, line 9; page 37, line 10 to page 50, line 7<br>& US 5736619 A & EP 821711 A1<br>& WO 1996/033238 A1 & DE 69629464 T<br>& DE 69629464 D & AT 247153 T<br>& DK 821711 T & NO 974832 A<br>& NZ 306894 A & PL 322898 A<br>& AU 699446 B & BR 9608196 A<br>& AU 5558396 A & CA 2218694 A<br>& CZ 9703331 A & HU 9802381 A<br>& TW 404959 B & PT 821711 E<br>& ES 2205027 T & KR 10-0253975 B<br>& MX 9708801 A | 1-3,10-13<br>4-9,14-18 |
| A | JP 2008-163055 A (National University Corporation Hokkaido University), 17 July 2008 (17.07.2008), entire text<br>(Family: none) | 1-18 |
| A | JP 2008-115292 A (National University Corporation Toyohashi University of Technology), 22 May 2008 (22.05.2008), entire text<br>(Family: none) | 1-18 |
| A | JP 55-500848 A (Ameron Inc.), 23 October 1980 (23.10.1980), entire text<br>& JP 63-18609 B & US 4250074 A<br>& EP 20604 A1 & WO 1980/000847 A1<br>& DE 2967498 D & BE 879533 A<br>& MX 151305 A & NO 793253 A<br>& NZ 191783 A & PH 15893 A<br>& AU 5157479 A & ES 485249 A<br>& BR 7908873 A & CA 1149540 A<br>& DK 263380 A & AT 14895 T<br>& IT 1121491 B & GR 73612 A<br>& KR 10-1983-0001473 B1 & AU 525461 B<br>& AT 14895 E & IT 7969058 D0 | 1-18 |
| A | JP 2011-527377 A (Biomimedica, Inc.), 27 October 2011 (27.10.2011), entire text<br>& US 2010/0010114 A1 & EP 2297217 A1<br>& WO 2010/005992 A1 & AU 2009268687 A<br>& CA 2727777 A & KR 10-2011-0044219 A | 1-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3290740 B